# EUROPEAN PATENT APPLICATION

(11) **EP 4 477 343 A1**
(43) Date of publication of application: **18.12.2024**
(21) Application number: 23752853.4
(22) Date of filing: 07.02.2023
(51) Int. Cl.: B23K 11/11, B23K 11/16, B23K 11/24

(54) **SPOT WELDING DEVICE, SPOT WELDING DEVICE CONTROL METHOD, SPOT WELDING JOINT, AND SPOT WELDING JOINT PRODUCTION METHOD**

(30) Priority: 09.02.2022 JP 2022018764
(71) Applicant: NIPPON STEEL CORPORATION, Chiyoda-ku Tokyo 100-8071 (JP)
(72) Inventor: KODAMA, Shinji, Tokyo 100-8071 (JP); FURUSAKO, Seiji, Tokyo 100-8071 (JP); YOSHINAGA, Chisato, Tokyo 100-8071 (JP); KUWAYAMA, Takuya, Tokyo 100-8071 (JP); TAKEDA, Kengo, Tokyo 100-8071 (JP); MITSUNOBU, Takuya, Tokyo 100-8071 (JP); SATO, Hironori, Tokyo 100-8071 (JP)
(74) Representative: Vossius & Partner Patentanwälte Rechtsanwälte mbB
(86) International application number: PCT/JP2023/003950
(87) International publication number: WO 2023/153389

(57) **Abstract**

This spot welding device is a spot welding device for performing spot welding on a plurality of steel sheets overlapping with each other by clamping the plurality of steel sheets between a pair of electrodes, and energizing the plurality of steel sheets while pressurizing the plurality of steel sheets, in which a speed at which the pair of electrodes approach each other is limited to at least 12.0 mm/s or slower during a period from start of the energization to end of the energization.

## Description

### [Technical Field of the Invention]

The present invention relates to a spot welding device, a method of controlling a spot welding device, a spot welded joint, and a method of producing the spot welded joint.

Priority is claimed on Japanese Patent Application No. 2022-018764, filed February 09, 2022, the content of which is incorporated herein by reference.

### [Related Art]

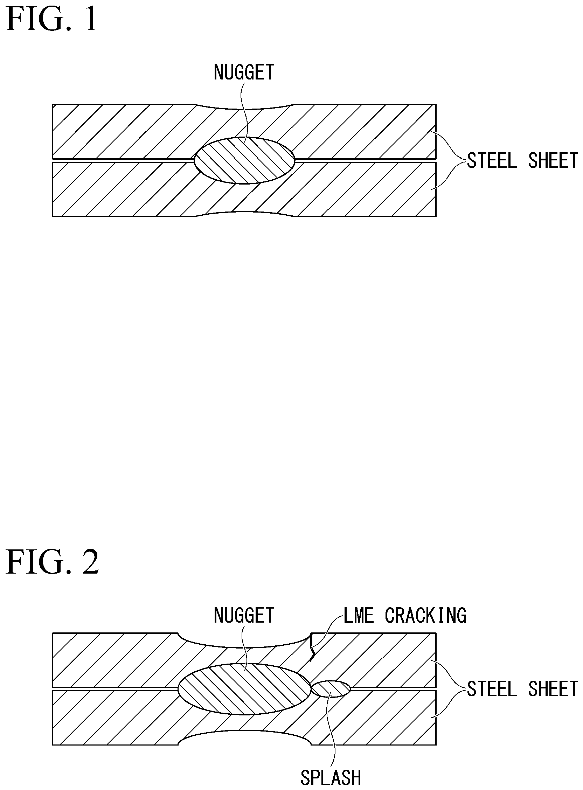

For example, a spot welding device that performs force control is known as described in Patent Documents 1 and 2. In a method of producing a spot welded joint using a spot welding device, a sheet set is clamped between a pair of electrodes facing each other, overlapping surfaces of steel sheets are heated and melted by energization heating using the electrodes to form a portion (nugget) molten and solidified near an interface between overlapping portions of the steel sheets, whereby the steel sheets are joined to each other (FIG. 1). In recent years, with the expansion of application of high strength steel sheets, there is a need for an improvement in joint strength, leading to a demand for welding with large nugget diameters.

### [Prior Art Document]

### [Patent Document]

[Patent Document 1] Japanese Unexamined Patent Application, First Publication No. H7-96376
[Patent Document 2] Japanese Unexamined Patent Application, First Publication No. 2001-300738

### [Disclosure of the Invention]

### [Problems to be Solved by the Invention]

However, an increase in nugget diameter causes local overheating of the steel sheets from an end portion of the nugget of the overlapping surfaces of the steel sheets, so that the steel sheets are easily melted and scattered (FIG. 2). The molten and scattered metal is called "splash" during spot welding and is a cause of a decrease in weld quality. The "presence or absence of splash" can be confirmed by visually inspecting a welding phenomenon during a time of welding current. When splash occurs, a small amount of molten metal is scattered from a welded portion (more specifically, from a gap between the steel sheets), so that the occurrence of splash can be easily confirmed by visual inspection. When splash occurs, the amount of molten metal inside the steel sheets decreases, so that the amount of surfaces of the steel sheets pressed by the electrodes increases, resulting in a large depression (indentation) on the surfaces of the steel sheets. This depression reduces a thickness of the steel sheet around the nugget, resulting in a decrease in joint strength. In addition, since a large tensile stress is generated in a depressed portion, liquid metal embrittlement (LME) cracking may occur in a case where the steel sheet is a galvanized steel sheet.

In a case where splash can be suppressed and the indentation can be reduced, it is possible to suppress the decrease in joint strength and LME cracking. However, considering various construction disturbances during actual production, such as a gap (sheet gap) between steel sheets, a tilt (tilt angle) of a pressurizing electrode, and a welding spot on a sheet end portion, it is difficult to completely prevent the splash. On the other hand, in a case where the indentation can be reduced even when splash occurs, it is possible to suppress the decrease in joint strength or LME cracking in a spot welded joint of the galvanized steel sheet.

The present invention has been made to solve the above problems, and an object thereof is to provide a spot welding device, a method of controlling a spot welding device, a spot welded joint, and a method of producing the spot welded joint, which are capable of reducing an indentation even in a case where a nugget diameter is increased, thereby increasing a strength of a welded joint and preventing LME cracking in a spot welded joint of a galvanized steel sheet.

### [Means for Solving the Problem]

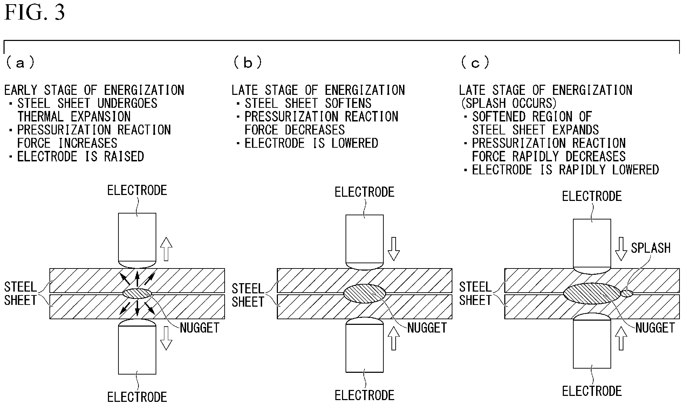

In a standard spot welding process, sheet thicknesses increase due to thermal expansion inside steel sheets when energization is started. Therefore, in an early stage of energization, pressurization reaction forces of electrodes increase, and the electrodes are displaced in a direction away from the steel sheets ((a) of FIG. 3). In a late stage of the energization, a heated region inside the steel sheets expands, so that the steel sheets are softened, a nugget grows, and the pressurization reaction forces of the electrodes decrease. Therefore, the electrodes press the steel sheets while approaching each other ((b) of FIG. 3). Furthermore, at the end of a late stage of welding, as a molten diameter (nugget diameter) expands, molten metal becomes splash and scatters from an end portion of the nugget, the pressurization reaction forces of the electrodes rapidly decrease, and the electrodes rapidly press the steel sheet, resulting in large indentations and large splash ((c) of FIG. 3). Therefore, the inventors thought that it is possible to reduce the indentation and the splash in a case where the nugget can be solidified before the electrodes strongly press the surfaces of the steel sheets by reducing displacement speeds (electrode approach speeds) of the electrodes during the occurrence of splash.

Electrode pressurization control methods in the related art have mostly focused on increasing responsiveness of electrode pressurization for the purpose of stabilizing a welding phenomenon. For example, when the responsiveness of the electrode pressurization is extremely small, a pressing operation of the electrode is delayed during the softening of the steel sheets in a first half of the late stage of the energization, an electrode force becomes too low, and a contact area between an electrode tip and the surface of the steel sheet decreases, resulting in defects in the formed nugget due to local heating on the surface of the steel sheet. Therefore, the trend of the related art has been to increase the responsiveness of the electrode pressurization and maintain a constant force during the time of welding current.

When the responsiveness of the electrode pressurization is increased by applying such a technology in the related art, the electrode force is kept constant at a set value. However, as described above, during softening of the steel sheets or during the occurrence of splash, the electrodes rapidly press the surfaces of the steel sheets, resulting in the expansion of depressions and the occurrence of indentations. That is, the idea proposed by the inventors to reduce the electrode approach speed is completely different from the method in the related art.

The present invention has been made to solve the above problems, and a gist of the present invention is as follows.
(1) A spot welding device for performing spot welding on a plurality of steel sheets overlapping with each other by clamping the plurality of steel sheets between a pair of electrodes, and energizing the plurality of steel sheets while pressurizing the plurality of steel sheets, in which a speed at which the pair of electrodes approach each other is limited to at least 12.0 mm/s or slower during a period from start of the energization to end of the energization.
   Here, the "speed at which the pair of electrodes approach each other" can be rephrased as, in a case where the pair of electrodes are constituted by a movable electrode and a fixed electrode as in an embodiment described below, a movement speed or a displacement speed of the movable electrode. In particular, in a case where the movable electrode is located above the fixed electrode, the "speed at which the pair of electrodes approach each other" can be rephrased as a lowering speed of the movable electrode.
(2) The spot welding device according to (1), in which the speed is limited to at least 12.0 mm/s or slower during a period from the end of the energization to end of a force maintenance time.
(3) A method of controlling a spot welding device for performing spot welding on a plurality of steel sheets overlapping with each other by clamping the plurality of steel sheets between a pair of electrodes facing each other, and energizing the plurality of steel sheets while pressurizing the plurality of steel sheets, the method including: limiting a speed at which the pair of electrodes approach each other to at least 12.0 mm/s or slower during a period from start of the energization to end of the energization.
(4) The method of controlling a spot welding device according to (3), in which the speed is limited to at least 12.0 mm/s or slower during a period from the start of the energization to end of a force maintenance time.
(5) A spot welded joint produced by overlapping a plurality of steel sheets having a tensile strength of 980 MPa or more and performing spot welding on the plurality of steel sheets, in which, when a minimum thickness of the plurality of steel sheets having a tensile strength of 980 MPa or more is denoted by t, a nugget diameter formed by the spot welding is 5.0√t or more, a minimum thickness of the spot welded joint is 0.70 times or more a sum of thicknesses of the plurality of steel sheets, and an area of a splash portion measured in an X-ray transmission image of a welded portion is 30% to 160% of an area of a pressure-welded portion.
(6) The spot welded joint according to (5), in which the nugget diameter is 5.5Vt or more.
(7) The spot welded joint according to (5) or (6), in which the spot welded joint has no crack.
(8) The spot welded joint according to any one of (5) to (7), in which the minimum thickness of the spot welded joint is 0.90 times or less the sum of the thicknesses of the plurality of steel sheets.
(9) A method of producing the spot welded joint according to any one of (5) to (8), the method including: limiting a speed at which a pair of electrodes provided in a spot welding device approach each other to at least 12.0 mm/s or slower during a period from start of energization to end of the energization.
(10) The method of producing the spot welded joint according to (9), in which the speed is limited to at least 12.0 mm/s or slower during a period from the end of the energization to end of a force maintenance time.

### [Effects of the Invention]

According to the above-described aspect of the present invention, it is possible to reduce an indentation even in a case where a nugget diameter is increased, thereby increasing a strength of a welded joint and preventing LME cracking in a spot welded joint of a galvanized steel sheet.

### [Brief Description of the Drawings]

FIG. 1 is a side sectional view showing a structure of a nugget and a structure around the nugget.
FIG. 2 is a side sectional view showing an example of an indentation.
FIG. 3 is a side sectional view showing displacements of electrodes during a time of welding current.
FIG. 4 is a side view showing an external appearance of a spot welding device according to the present embodiment.
FIG. 5 is a functional block diagram of the spot welding device according to the present embodiment.
FIG. 6 is a flowchart showing a procedure of processing by the spot welding device according to the present embodiment.
FIG. 7 is a graph showing a comparison between welding periods of the related art and the present embodiment.
FIG. 8 is a cross-sectional view showing a schematic configuration of a spot welded joint according to the present embodiment.
FIG. 9 is an example of an X-ray cross section image.
FIG. 10 is an example of a planar X-ray transmission image.

### [Embodiments of the Invention]

Next, embodiments of the present invention will be described. In the following description, definitions of "spot welding", "welding time", "squeeze time", "force maintenance time", "nugget", "nugget diameter", and "indentation" are based on JIS Z 3001-6:2013 "Welding and allied processes -- Vocabulary -- Part 6: Resistance welding". Specific descriptions will be provided as follows.
· "Spot welding": Resistance welding in which base metals overlapping with each other are clamped between tips of electrodes with properly shaped tips, and are locally heated by concentrating a current and a force on a relatively small portion, and are simultaneously pressurized with the electrode.
· "Welding time (weld time)": A time during which a current is carried in resistance welding. This is also referred to as a weld time.
· "Squeeze time": In lap resistance welding, a time from an output of an electrode pressurization command signal to start of a welding current flow. This is also referred to as a squeeze time.
· "Force maintenance time": A time during which a force is maintained at a predetermined value. A rise time and a fall time of the force are omitted.
· "Expulsion or splash": A phenomenon in which a base metal is locally overheated, melted, and scatters or the molten metal itself in lap resistance welding.
· "Nugget": A molten and solidified portion generated in a welded portion in lap resistance welding.
· "Nugget diameter": A diameter of a nugget portion measured at a joint interface by a cross section test of a spot welded portion or a projection welded portion.
· "Indentation": A depression on a base metal surface caused by an electrode tip and a disc-shaped electrode as a result of welding in lap resistance welding. This is also referred to as a depression.

The present inventors conducted a detailed investigation on a splash phenomenon during spot welding and an indentation associated therewith, and found that the splash phenomenon is not adversely affected unless a speed at which a pair of electrodes for spot welding approach each other (hereinafter, referred to as "electrode approach speed" or "approach speed") is extremely low, the indentation (depression) during the occurrence of splash can be reduced by limiting an upper limit of the electrode approach speed during the occurrence of splash, and as a result, a strength of a welded joint is increased, thereby preventing LME cracking in a spot welded joint of a galvanized steel sheet. On the other hand, in a spot welding device in the related art, high responsiveness was considered necessary for electrode movement in order to follow rapid fluctuations in a surface-to-surface distance between steel sheets due to a reduction in reaction force during pressurization caused by expansion or melting due to heating, and to maintain a predetermined force, which was determined in advance. Therefore, while there were cases where a displacement speed of electrodes (a speed at which a pair of electrodes approach or separate from each other) is set to be very fast, there were no cases where the electrode displacement speed, including the electrode approach speed, is intentionally set to a low speed. A spot welding device, a spot welding device control method, a spot welded joint, and a spot welded joint production method according to the present embodiment have been made based on the above findings. According to the present embodiment, it is possible to prevent the occurrence of LME cracking particularly at a shoulder portion (an end portion of a depressed portion on a surface of a welded portion) of a welded portion (a portion joined by the spot welding device, including a nugget and depressed steel sheet portions above and below the nugget), and to obtain a resistance spot welded joint having sound joint strength.

### <1. Overall Configuration of Spot Welding Device>

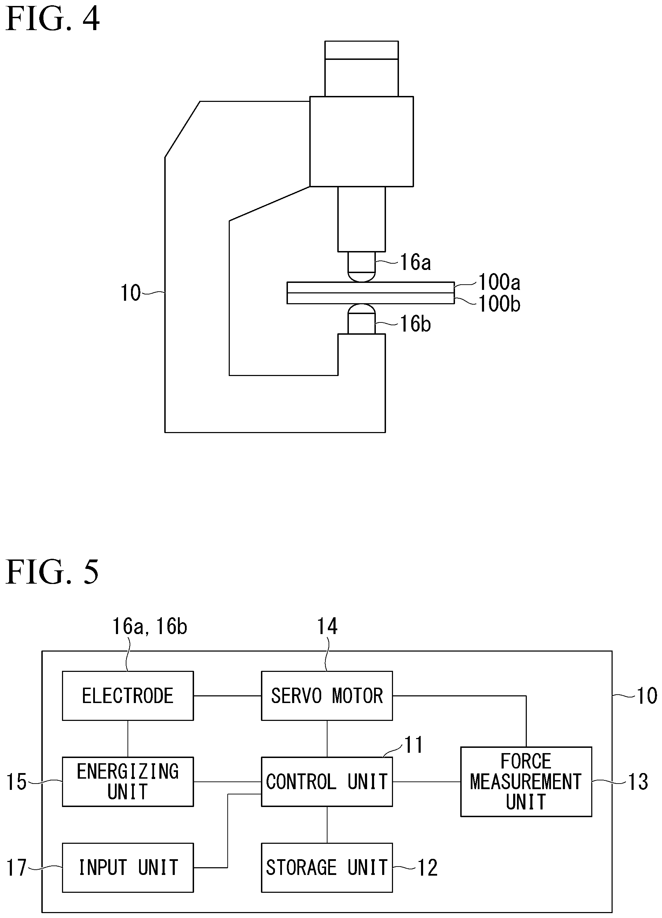

First, an overall configuration of a spot welding device 10 will be described with reference to FIGS. 4 and 5. FIG. 4 is a side view showing an external appearance of the spot welding device 10, and FIG. 5 is a functional block diagram of the spot welding device 10. In the following example, a case of a servo motor type spot welding device is described as an example, but a device that drives electrodes is not limited to a servo motor. As another example, an air cylinder or the like can be adopted. In addition, in FIG. 4, two steel sheets 100a and 100b are set as a sheet set to be joined, but a larger number of steel sheets may be joined. Types of the steel sheets 100a and 100b are also not particularly limited. For example, in the sheet set to be joined, the steel sheet (in this example, either or both of the steel sheets 100a and 100b) disposed on at least one surface may be a galvanized high strength steel sheet having a tensile strength of 980 MPa or more. In this case, LME cracking is a concern. However, as will be described later, it is possible to suppress the occurrence of LME cracking according to the present embodiment. In addition, sheet thicknesses of the steel sheets 100a and 100b are not particularly limited, but may be, for example, about 1.2 to 2.3 mm. A sum of the sheet thicknesses of the steel sheets overlapping with each other does not need to be particularly limited, but may be, for example, about 2.4 to 5.0 mm or about 2.4 to 4.5 mm. In this case, according to the present embodiment, a total sum of depression amounts (a total sum of depression amounts of both front and rear surfaces of a spot welded joint) can be set to 30% or less of the sum of the sheet thicknesses (original thicknesses) of the overlapping steel sheets. That is, a minimum thickness of the spot welded joint (a minimum value of a distance between the surfaces of the steel sheets at indentation portions) can be set to 0.70 times or more the sum of the thicknesses (original thicknesses) of the overlapping steel sheets. Therefore, the total sum of the depression amounts can be reduced relative to the sheet thicknesses, and thus the indentation can be reduced. In addition, for the steel sheets 100a and 100b (in a case where there are three or more steel sheets to be joined, the three or more steel sheets), when the sheet thickness of the thinner steel sheet (in the case where there are three or more steel sheets, the thinnest steel sheet) is denoted by t (mm), a nugget diameter formed by spot welding can be set to 5.0√t (mm) or more or 5.5√t (mm) or more. In this manner, a relatively large nugget is formed in the present embodiment. In such a case, splash is likely to occur, and as a result, indentation is likely to occur. However, in the present embodiment, as will be described later, a speed (electrode approach speed) at which electrodes (a movable electrode 16a and a fixed electrode 16b) approach each other during spot welding is intentionally limited to a specific value (12.0 mm/s) or lower. Accordingly, even in a case where splash occurs, the indentation can be reduced, and the total sum of the depression amounts can be set to 30% or less of the sum of the sheet thicknesses (original thicknesses) of the overlapping steel sheets. As a result, the strength of the welded joint can be increased, and LME cracking can be prevented. In addition, instead of setting the sheet thickness of the thinnest steel sheet to t (mm) as mentioned above, the minimum sheet thickness in the steel sheet (for example, a high strength steel sheet having a tensile strength of 980 MPa or more) that serves as a strength member of the welded joint is set to t (mm), and the nugget diameter is set to 5.0√t (mm) or more or 5.5√t (mm) or more. In the present embodiment, the steel sheet to be subjected to spot welding is not limited to a flat steel sheet. In a case where a portion to be clamped between the electrodes is in a steel sheet shape, spot welding can be performed. Therefore, the steel sheet shape means that there is a portion that can be clamped between electrodes. Specifically, the steel sheet may be a cold-worked steel sheet (for example, steel processed by performing bending or drawing on a steel sheet with a roll or press), steel (also referred to as a hot-stamping formed body or the like) produced by performing hot stamping (press forming after hot heating) on a steel sheet, or the like.

The spot welding device 10 is for performing spot welding on two or more steel sheets (for example, the steel sheets 100a and 100b shown in FIG. 4) overlapping with each other, and includes a control unit 11, a storage unit 12, a force measurement unit 13, a servo motor 14 (an electrode driving device), an energizing unit 15, the movable electrode 16a, the fixed electrode 16b, and an input unit 17. The spot welding device 10 includes a central processing unit (CPU), a read-only memory (ROM), a random-access memory (RAM), a force measurement device (for example, a device that performs force measurement using a built-in load cell or force estimation using a load current of a servo motor), a servo motor, an energizing device, an electrode and an electrode driving mechanism, and an input device (a keyboard, an input switch, or the like). The spot welding device 10 realizes the control unit 11, the storage unit 12, the force measurement unit 13, the servo motor 14, the energizing unit 15, the movable electrode 16a, the fixed electrode 16b, and the input unit 17 described above using these hardware configurations.

The storage unit 12 stores data necessary for processing performed by the spot welding device 10. Examples of the data include data indicating a correlation between a torque of the servo motor and a force by the electrode, data indicating a correlation between a rotation speed and a rate of change in the torque of the servo motor 14 and a displacement speed of the electrode, and programs necessary for an operation of the control unit 11. Here, the data indicating the correlation between the rotation speed and the rate of change (time rate of change) in the torque of the servo motor 14 and the displacement speed of the electrode will be described in detail. The displacement speed of the electrode is a displacement speed of the movable electrode 16a. Here, the fixed electrode 16b is fixed and the fixed electrode 16b is provided above the fixed electrode 16b. Therefore, the speed (electrode approach speed) at which the movable electrode 16a and the fixed electrode 16b, which constitute the pair of electrodes, approach each other can also be rephrased as a lowering speed of the movable electrode 16a. As shown in the data, the rate of change in the torque of the servo motor 14 also affects the displacement speed of the electrode. The reason is as follows. In a case where stiffness of a gun (including a frame containing the pair of electrodes; the same applies hereinafter) of the movable electrode 16a and the fixed electrode 16b is low, the gun may deflect when a strong torque is applied to these electrodes. When splash occurs, pressurization reaction forces from the steel sheets 100a and 100b decrease, so that the deflection of the gun is released, and the gun stretches like a spring, that is, the movable electrode 16a and the fixed electrode 16b move at a high speed. As a result, there are cases where the electrode approach speed of the movable electrode 16a (the speed at which the movable electrode 16a and the fixed electrode 16b approach each other) exceeds 12.0 mm/s, which is an upper limit, even when the rotation speed of the servo motor 14 is set to be low. Accordingly, the movable electrode 16a is rapidly pressed against the steel sheets 100a and 100b, resulting in an indentation.

That is, in simple feedback control using only the rotation speed of the servo motor 14, there are cases where the displacement speed of the movable electrode 16a cannot be accurately specified. Therefore, in such a case, in the present embodiment, it is preferable to specify the displacement speed of the movable electrode 16a by considering not only the rotation speed of the servo motor 14 but also the rate of change in torque. For example, in a case where a rapid decrease in torque at the time when splash occurs is detected and a rate of decrease (time rate of change) in the torque exceeds a predetermined value, the displacement speed of the electrode is reduced. In addition, in order to prevent rapid displacement of the electrode due to a decrease in the stiffness of the gun, it is desirable to maintain a state in which the torque of the servo motor is low. Therefore, in some cases, a direction of the displacement speed of the electrode may be upward. In a case where the stiffness of the gun of the spot welding device 10 is high, it is not necessary to specify the displacement speed of the movable electrode 16a while considering the rate of change in the torque described above (and described later).

During a period from start of energization to end of the energization, an upper limit (V_{D}) of the lowering speed (electrode approach speed) of the movable electrode 16a is in a range of 12.0 mm/s or lower. The lowering speed mentioned here is assumed to be positive in a downward direction. In more detail, in FIG. 4, a vertical downward direction is a positive direction. Therefore, in a case where the movable electrode 16a presses the steel sheets 100a and 100b, the movable electrode 16a is displaced in the positive direction. In this case, the lowering speed of the movable electrode 16a has a positive value. The control unit 11 compares the lowering speed of the movable electrode 16a to the above-described upper limit and performs control as described below so that the lowering speed of the movable electrode 16a does not exceed 12.0 mm/s, which is the above-described upper limit. In addition, the period from the start of the energization to the end of the energization is also a period from a start time of a welding time described above to an end time of the welding time.

In the present embodiment, the upper limit can be randomly set to an even lower random upper limit by an input operation (an input operation using the input unit 17) by an operator. There are also factors related to the stiffness of the gun described above. Considering a size of the indentation required, a magnitude of the strength of the welded joint, the LME cracking resistance, and other factors (for example, a size of splash), the upper limit may be limited to a speed slower than 12.0 mm/s based on a preliminary test result conducted as necessary. In addition, in the present embodiment, the displacement speed of the movable electrode 16a may be set to different values in an early stage of the energization and in a late stage of the energization. For example, the upper limit of the lowering speed in the early stage of the energization may be set to at least 12.0 mm/s, and the upper limit of the lowering speed in the late stage of the energization may be set to at least 8.0 mm/s. The early stage of the energization and the late stage of the energization are distinguished from each other by an amount of heat input to the steel sheets 100a and 100b from the movable electrode 16a and the fixed electrode 16b (here, the amount of heat input is an integral of a current value over a time of welding current). For example, a period from the start of the energization to the time when heat of 1/3 of the total amount of heat input is input may be referred to as the early stage of the energization, and the remaining period may be referred to as the late stage of the energization. The time of welding current and the current value are set in advance as welding conditions, but there are cases where the current value is sequentially changed by feedback control during energization. In the present embodiment, the early stage of the energization and the late stage of the energization are distinguished from each other based on a value of the welding current value set in advance.

The force measurement unit 13 detects the torque of the servo motor 14 and the rotation speed of the servo motor 14 at least during the time of welding current and outputs detected values to the control unit 11. Preferably, the torque of the servo motor 14, the rotation speed of the servo motor 14, and the like during a welding period including a squeeze time, the time of welding current, and a force maintenance time as well as the time of welding current are detected and output to the control unit 11. The servo motor 14 drives (lowers) the movable electrode 16a to pressurize the steel sheets 100a and 100b with the movable electrode 16a and the fixed electrode 16b. The energizing unit 15 energizes the movable electrode 16a and the fixed electrode 16b under the control of the control unit 11. Accordingly, overlapping surfaces of the steel sheets 100a and 100b are heated and melted via the movable electrode 16a and the fixed electrode 16b. The movable electrode 16a and the fixed electrode 16b clamp the two or more overlapping steel sheets (for example, the steel sheets 100a and 100b shown in FIG. 4) and energize the overlapping surfaces to heat and melt the overlapping surfaces. The input unit 17 enables the input operation by the operator, and the operator inputs various information (for example, the upper limit of the displacement speed of the movable electrode 16a) using the input unit 17.

The control unit 11 performs the following processes in addition to controlling each constituent element of the spot welding device 10. That is, the control unit 11 sets the welding period including the squeeze time, the time of welding current, and the force maintenance time. During the squeeze time, the control unit 11 controls the servo motor 14 so that the movable electrode 16a and the fixed electrode 16b pressurize the steel sheets 100a and 100b with a constant force. Specifically, the control unit 11 outputs drive start information to the servo motor 14. The servo motor 14 starts driving based on the drive start information. Accordingly, the movable electrode 16a and the fixed electrode 16b press the steel sheets 100a and 100b. The force measurement unit 13 detects the torque of the servo motor 14 at this time and outputs measurement information to the control unit 11. The control unit 11 controls the torque of the servo motor 14 so that the force by the servo motor 14 becomes a predetermined value based on the obtained measurement information and the data stored in the storage unit 12 (data indicating the correlation between the torque of the servo motor and the force by the electrode). That is, the control unit feeds back a difference value between a measured force by the electrode measured by the force measurement unit 13 and a set force (a set value for the force) or the like to the servo motor 14 and performs feedback control so that the measured force is kept near the set force.

Furthermore, the force measurement unit 13 detects the rotation speed and the rate of change in the torque of the servo motor 14 and outputs measurement information to the control unit 11. The control unit 11 specifies the displacement speed of the movable electrode 16a based on the data stored in the storage unit (data indicating the correlation between the rotation speed and the rate of change in the torque of the servo motor 14 and the displacement speed of the electrode). Then, the control unit 11 performs feedback control on the servo motor 14 so that the displacement speed of the specified movable electrode 16a does not exceed the preset upper limit of the displacement speed (here, the electrode approach speed (lowering speed)). That is, in a case where the lowering speed of the specified movable electrode 16a exceeds the preset upper limit, the control unit 11 recalculates the rotation speed of the servo motor 14 so that the lowering speed of the electrode becomes the upper limit or lower. The control unit 11 then drives the servo motor 14 at the calculated rotation speed. Meanwhile, in a case where the lowering speed of the specified electrode is equal to or slower than the preset upper limit, the control unit 11 maintains the driving of the servo motor 14. Here, in a case where exceeding of the upper limit of the lowering speed of the movable electrode 16a is not limited, splash occurs, and the pressurization reaction forces from the steel sheets 100a and 100b rapidly decrease. Then, the movable electrode 16a and the fixed electrode 16b rapidly press the steel sheets 100a and 100b. As a result, indentation occurs.

Here, as described above, the upper limit of the lowering speed (electrode approach speed) is set in advance in a range of 12.0 mm/s or lower. Preferably, the upper limit of the lowering speed may be set to, for example, 10.0 mm/s or lower, 8.0 mm/s or lower, or 6.0 mm/s. As necessary, the upper limit may be set to different numerical values in the early stage of the energization and the late stage of the energization as described above. However, in this case, the upper limit of the late stage of the energization is preferably smaller than the upper limit of the early stage of the energization. In the present embodiment, the upper limit value can be randomly set in the above range by the input operation (the input operation using the input unit 17) by the operator. The upper limit may be determined, for example, by conducting a preliminary test or the like. That is, test pieces corresponding to the steel sheets 100a and 100b are prepared and are subjected to spot welding. At this time, the lowering speed of the movable electrode 16a when splash occurs may be specified and set as the upper limit. The "presence or absence of splash" can be confirmed, for example, by visually observing a welding phenomenon during the time of welding current. When splash occurs, a small amount of molten metal from a welded portion (more specifically, from a gap between the steel sheets) is scattered from the gap between the steel sheets, so that the occurrence of splash can be easily confirmed by visual inspection. The upper limit may be determined according to the test results obtained in preliminary tests, such as the size of the indentation, the magnitude of the strength of the welded joint, and the LME cracking resistance, as necessary, instead of the presence or absence of splash.

The early stage of the energization is a period for forming a good contact state between the steel sheets or between the steel sheet and the electrode, and it is desirable to set the displacement speed to be relatively fast and to allow the electrode to follow thermal expansion of the steel sheets with good responsiveness. However, since splash may occur even in the early stage of the energization, the control unit 11 performs feedback control so that the lowering speed (electrode approach speed) of the movable electrode 16a is equal to or slower than the preset upper limit in a case where the lowering speed exceeds the upper limit. Since the late stage of the energization is a period in which splash is likely to occur, it is desirable to set the lowering speed to be slow and to prevent excessive depressions (indentations).

As described above, at the end of a late stage of the welding, the molten metal is scattered from an end portion of the nugget to the surroundings as splash due to the expansion of a molten diameter (nugget diameter), and the pressurization reaction force of the electrode rapidly decreases. However, in the present embodiment, even in a case where the pressurization reaction forces of the steel sheets 100a and 100b rapidly decrease at the end of the late stage of the energization, the movable electrode 16a is slowly lowered (that is, the control unit 11 performs feedback control on the servo motor 14 so that the lowering speed of the movable electrode 16a does not exceed the preset upper limit). While the movable electrode 16a is slowly lowered, the nugget solidifies. Therefore, the indentation can be reduced. As a result, even in a case where either or both of the steel sheets 100a and 100b are galvanized high strength steel sheets, it is possible to suppress the occurrence of LME cracking.

In a case where the electrode driving device is an air cylinder instead of the servo motor 14, the displacement speed may be set to be low (that is, 12.0 mm/s or slower) by setting an air cylinder capacity to be low and reducing the responsiveness of the electrode displacement. In a case where it is difficult to adjust the displacement speed of the movable electrode 16a to 12.0 mm/s or slower even by adjusting the air cylinder capacity, the servo motor 14 may be used instead of the air cylinder. In addition, even in the control using the servo motor 14, the lowering speed may be set to a specified value (that is, a value equal to or less than the upper limit of the lowering speed described above) by setting the responsiveness of the servo motor to be low without sequentially calculating the lowering speed. As necessary, the spot welding device in which the air cylinder is used as the electrode driving device may be excluded.

During the force maintenance time, the control unit 11 performs the above-described feedback control for a constant force. Accordingly, the movable electrode 16a and the fixed electrode 16b press the steel sheets 100a and 100b with a constant force. Accordingly, it is possible to suppress LME cracking. In addition, even during the force maintenance time after the end of the energization, splash may occur, and the movable electrode 16a and the fixed electrode 16b may rapidly press the steel sheets 100a and 100b. Therefore, the control unit 11 preferably performs the feedback control of the displacement speed of the movable electrode 16a described above (control for maintaining the displacement speed of the movable electrode 16a at the upper limit or lower) even during the force maintenance time after the end of the energization.

Problems associated with a reduction in the lowering speed described in the later part of this paragraph have been widely known, and a lower limit has been limited in the related art. Therefore, in the present invention, it is not necessary to intentionally limit the lower limit of the lowering speed. However, the lower limit of the lowering speed may be limited based on the findings in the related art. For example, the lower limit of the lowering speed may be set to 1.0 mm/s or more, 1.8 mm/s or more, or 2.5 mm/s or more. This is because, when the lowering speed is slow, the electrode displacement cannot follow the fluctuation of the force due to thermal contraction at the end of the energization, which may lead to increased splash during welding or internal defects in the weld metal. In addition, when the responsiveness of the electrode pressurization is extremely small, a pressing operation of the electrode is delayed during the softening of the steel sheets in a first half of the late stage of the energization, the electrode force becomes too low, a contact area between an electrode tip and the surface of the steel sheet decreases, and there is a possibility that defects occur in the formed nugget due to local heating on the surface of the steel sheet.

### <2. Processing by spot welding Device (Spot Welding Device Control Method and Spot Welded Joint Production Method)>

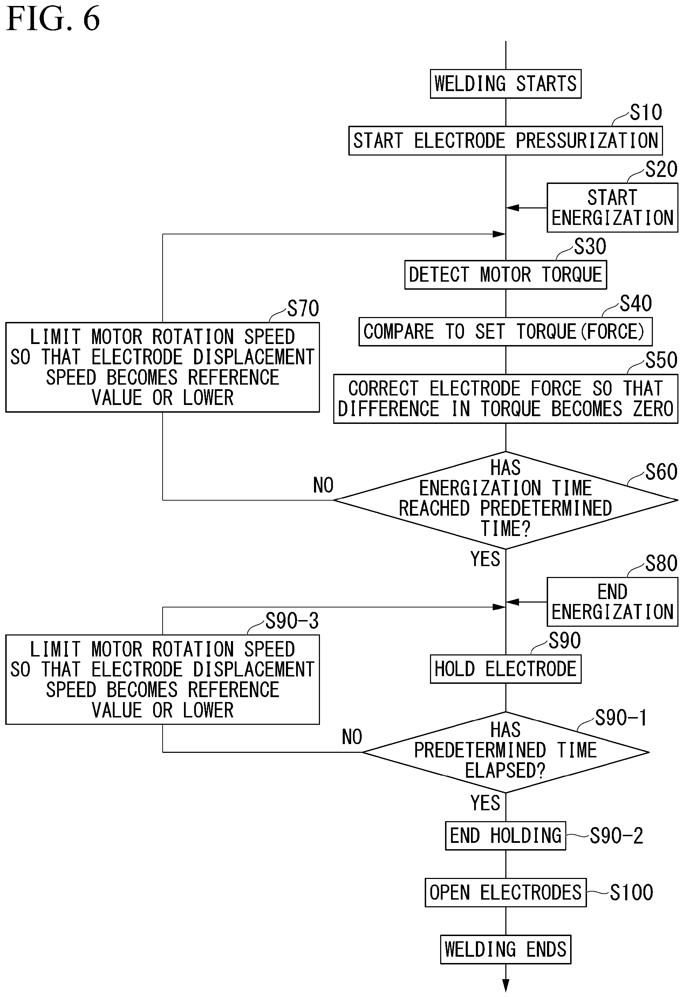

Next, an example of a procedure of a welding process by the spot welding device 10 will be described according to a flowchart shown in FIG. 6. In order to form a nugget having a desired nugget diameter or the like, a welding period including a squeeze time, a time of welding current, and a force maintenance time is determined in advance by a preliminary test. In the preliminary test, an energization pattern, a force, and the like are also determined. In the preliminary test, steel sheets to be joined are overlapped with each other and spot welding is actually performed thereon to form a nugget. In addition, each parameter described above is determined so that the nugget diameter and the like have desired values.

During the squeeze time of step S10, the control unit 11 controls the servo motor 14 so that the movable electrode 16a and the fixed electrode 16b pressurize the steel sheets 100a and 100b with a constant force. Specifically, the control unit 11 outputs drive start information to the servo motor 14. The servo motor 14 starts driving based on the drive start information. Accordingly, the movable electrode 16a and the fixed electrode 16b press the steel sheets 100a and 100b. The force measurement unit 13 detects the torque of the servo motor 14 at this time and outputs measurement information to the control unit 11. The control unit 11 controls the torque of the servo motor 14 so that the force by the servo motor 14 becomes constant based on the obtained measurement information and the data stored in the storage unit 12 (data indicating the correlation between the torque of the servo motor and the force by the electrode). That is, the control unit feeds back the difference value between the measured force measured by the force measurement unit 13 and the set force to the servo motor 14.

In step S20, the control unit 11 outputs energization start information to the energizing unit 15. The energizing unit 15 starts energizing the movable electrode 16a and the fixed electrode 16b according to the preset energization pattern (an energization pattern for obtaining a desired nugget or the like) based on the energization start information. The energizing unit 15 outputs heat input amount information regarding the amount of heat input (here, the amount of heat input is an integral of a current value over a time of welding current) to the control unit 11. The control unit 11 identifies the early stage of the energization and the late stage of the energization based on the heat input amount information. Specifically, the control unit 11 may set the period from the start of the energization to the time when heat of 1/3 of the total amount of heat input is input as the early stage of the energization, and the remaining period as the late stage of the energization. As a matter of course, a method of distinguishing the early stage of the energization and the late stage of the energization from each other is not limited to this method.

In Step S30, the force measurement unit 13 detects (senses) the torque of the servo motor 14 and outputs the measurement information to the control unit 11.

In Step S40, the control unit 11 specifies the force by the servo motor 14 based on the obtained measurement information and the data stored in the storage unit 12 (data indicating the correlation between the torque of the servo motor and the force by the electrode). Then, the control unit 11 compares the force by the servo motor 14 to the preset force (set force, a force for obtaining a desired nugget, and the like).

In step S50, the control unit 11 calculates an output value of the servo motor 14 so that a difference between the force by the servo motor 14 and the preset force becomes zero (that is, both are equal to each other). That is, the control unit 11 controls the torque of the servo motor 14 so that the force by the movable electrode 16a and the fixed electrode 16b becomes constant.

In step S60, the control unit 11 compares the time of welding current to a predetermined time (time for obtaining a desired nugget or the like). In a case where the time of welding current has reached the predetermined time, the process proceeds to step S80, and in a case where the time of welding current does not reach the predetermined time, the process proceeds to step S70. Alternatively, whether or not the amount of heat input to the movable electrode 16a and the fixed electrode 16b matches the preset total amount of heat input may be determined. In a case where the control unit 11 determines that the amount of heat input to the movable electrode 16a and the fixed electrode 16b matches the preset total amount of heat input, the process proceeds to step S80, and in a case where the control unit 11 determines that the two do not match each other, the process proceeds to step S70.

In step S70, the force measurement unit 13 detects the rotation speed and the rate of change in the torque of the servo motor 14 and outputs the measurement information to the control unit 11. The control unit 11 specifies the displacement speed of the movable electrode 16a based on the data stored in the storage unit (data indicating the correlation between the rotation speed and the rate of change in the torque of the servo motor 14 and the displacement speed of the electrode). Then, the control unit 11 performs feedback control on the servo motor 14 so that the lowering speed of the specified movable electrode 16a does not exceed the preset upper limit. That is, in a case where the displacement speed of the specified movable electrode 16a exceeds the preset upper limit of the lowering speed, the control unit 11 recalculates the rotation speed of the servo motor 14 so that the lowering speed of the movable electrode 16a becomes the upper limit or lower. The control unit 11 then drives the servo motor 14 at the calculated rotation speed. Meanwhile, in a case where the lowering speed of the specified movable electrode 16a is equal to or slower than the preset upper limit, the control unit 11 maintains the driving of the servo motor 14. Thereafter, the spot welding device 10 returns to step S30.

As necessary, a distance between the movable electrode 16a and the fixed electrode 16b may be directly measured, and the displacement speed of the movable electrode 16a may be obtained from the measured distance. In this case, it is not necessary to specify the displacement speed of the movable electrode 16a based on the data stored in the storage unit in the control unit 11 in addition to the output of the measurement information of the rotation speed and the rate of change in the torque of the servo motor 14 to the control unit 11.

In step S80, the control unit 11 ends the time of welding current. In step S90, processing for the force maintenance time is performed. In this step, it is also desirable to perform the above-described feedback control for a constant force and the control of the displacement speed (lowering speed) (processing of steps S30 to S70). Specifically, the control unit 11 performs processing of steps S30 to S50 in parallel with processing of step S90. In step S90-1, the control unit 11 determines whether or not a predetermined time has elapsed. In a case where it is determined that the predetermined time has elapsed, the process proceeds to step S90-2 and processing for the force maintenance time is ended. In step S90-1 , in a case where the control unit 11 determines that the predetermined time has not elapsed, the process proceeds to step S90-3 and the same processing as in step S70 is performed. Thereafter, the control unit 11 returns to step S90. Accordingly, the movable electrode 16a and the fixed electrode 16b press the steel sheets 100a and 100b with a constant force. Accordingly, it is possible to suppress LME cracking.

In step S100, the control unit 11 opens the movable electrode 16a and the fixed electrode 16b. The spot welding device 10 ends the welding process by the above-described processing. Energization conditions for the time of welding current are not particularly limited, but a current value of 5 to 12 kA, a force of 3 to 8 kN, and a time of welding current of 15 to 100 ms may be set. Specific values may be determined in a preliminary test as described above.

The above-described method is an example, and the above-described method may be changed as long as the method of a spot welding method in which the upper limit of the electrode approach speed is limited.

### <3. Comparison between Present Embodiment and Related Art>

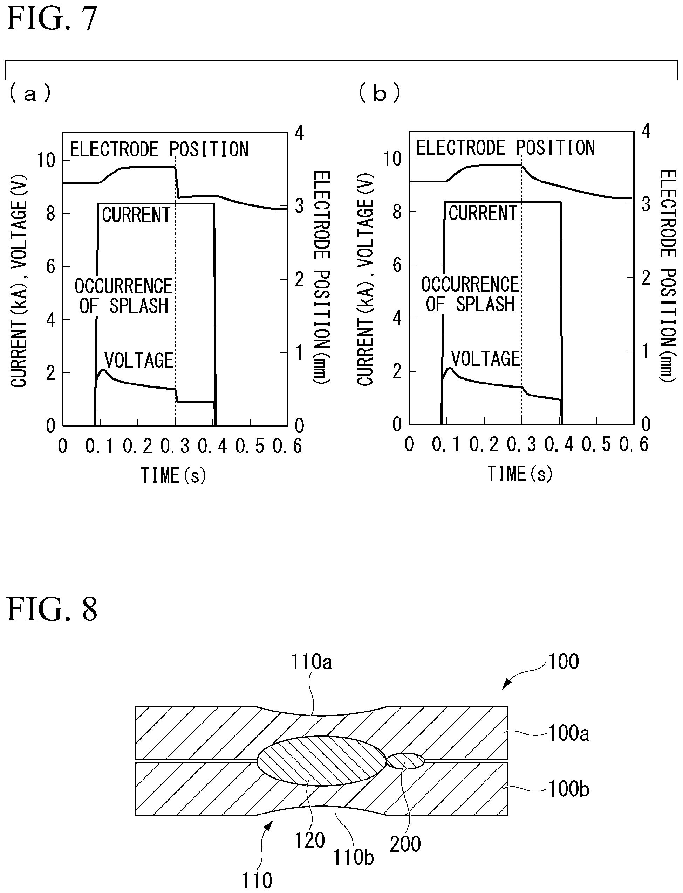

Next, a comparison between the present embodiment and the related art will be described with reference to (a) and (b) of FIG. 7. (a) of FIG. 7 is a graph showing an electrode position, a current value, and a voltage value at each time point of a welding period in the related art (that is, a technology in which an upper limit of a lowering speed is not limited), (b) of FIG. 7 is a graph showing an electrode position, a current value, and a voltage value at each time point of a welding period in the present embodiment. The electrode position indicates a position of an upper electrode (in a case where the upper electrode is the movable electrode 16a and a lower electrode is the fixed electrode 16b as shown in FIG. 4). Position 0 is a position where the electrodes are in direct contact with each other (without a plurality of steel sheets). In both (a) and (b) of FIG. 7, welding was performed under conditions in which a welding current was increased to expand the nugget diameter (aiming for 5.5x/t) (t: sheet thickness of the thinnest steel sheet included in the sheet set).

As shown in (a) of FIG. 7, in an initial stage of energization in the related art, the upper electrode is raised, but at the end of a late stage of the energization, the upper electrode rapidly descends due to the occurrence of splash. A final electrode pressing amount relative to an original sheet thickness also increases. Contrary to this, in the present embodiment, the lowering speed during the occurrence of splash is reduced, and the final electrode pressing amount is also reduced.

As described above, at the end of the late stage of the welding, the molten metal is scattered from the end portion of the nugget to the surroundings as splash due to the expansion of the molten diameter (nugget diameter), and the pressurization reaction force of the electrode rapidly decreases. However, in the present embodiment, even in a case where the pressurization reaction forces of the steel sheets 100a and 100b rapidly decrease at the end of the late stage of the energization, the movable electrode 16a is slowly lowered. While the movable electrode 16a is slowly lowered, the nugget solidifies. Therefore, the indentation can be reduced. As a result, even in a case where either or both of the steel sheets 100a and 100b are galvanized high strength steel sheets, it is possible to suppress the occurrence of LME cracking.

### <4. Spot Welded Joint>

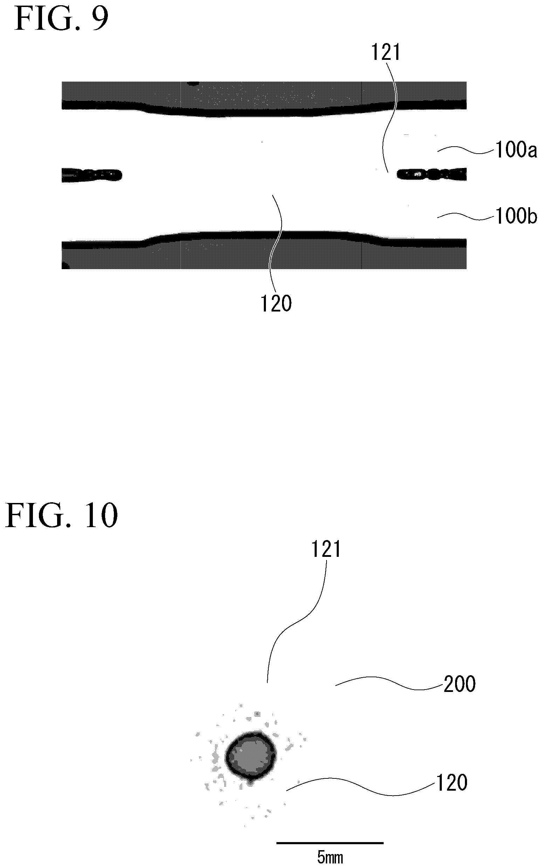

Next, a configuration of a spot welded joint 100 according to the present embodiment will be described with reference to FIGS. 8 and 9. FIG. 8 is a cross-sectional view of the spot welded joint 100 when the spot welded joint 100 is cut in a plane passing through a center of a nugget 120 and parallel to a thickness direction of the spot welded joint 100. FIG. 10 is an X-ray image of the welded portion photographed by X-ray transmission from the surface of the steel sheet. The spot welded joint 100 includes the steel sheets 100a and 100b and a welded portion 110. In FIG. 8, the two steel sheets 100a and 100b are spot-welded, but three or more steel sheets may be spot-welded.

The steel sheets 100a and 100b are steel sheets similar to the steel sheets described above. At least one of the steel sheets 100a and 100b may be a steel sheet having a tensile strength of 980 MPa or more. Both the steel sheets may be steel sheets having a tensile strength of 980 MPa or more. In particular, in a case where a plurality of steel sheets having a tensile strength of 980 MPa or more are overlapped and spot-welded, a larger nugget diameter is often required in order to achieve a higher joint strength. Therefore, hereinafter, a spot welded joint with a larger nugget diameter produced by overlapping a plurality of steel sheets having a tensile strength of 980 MPa or more and performing spot welding thereon will be described.

The welded portion 110 is a portion joined by the spot welding device 10 and includes a nugget 120 and the depressed steel sheet portions (depressed portions) 110a and 110b above and below the nugget 120. Furthermore, a splash portion 200 is formed in the vicinity of the nugget 120. Here, both the steel sheets 100a and 100b have a tensile strength of 980 MPa or more. In addition, in a case where three or more steel sheets are spot-welded, the tensile strength of at least two steel sheets is 980 MPa or more.

A nugget diameter (a diameter of the nugget 200 extending in a direction passing through the center of the nugget 200 and perpendicular to the thickness direction of the welded portion 110 in the cross section shown in FIG. 8. When the minimum sheet thickness (the sheet thickness that is the minimum among a plurality of steel sheets having a tensile strength of 980 MPa or more in a case where three or more steel sheets are spot-welded) of the steel sheets 100a and 100b is indicated by t (mm), the distance between the steel sheets 100a and 100b (refer to FIG. 9) is 5.0√t (mm) or more. The nugget diameter is preferably 5.5√t (mm) or more. Here, instead of setting the sheet thickness of the thinnest steel sheet to t (mm), the minimum sheet thickness in the steel sheet (for example, a high strength steel sheet having a tensile strength of 980 MPa or more) that serves as a strength member of the welded joint is set to t (mm), and the nugget diameter is set to 5.0√t (mm) or more or 5.5Vt (mm) or more. As described above, the spot welded joint 100 according to the present embodiment includes the nugget 120, which is relatively large. In a case where the large nugget 120 is formed in the welded portion 110, the splash 200 is likely to occur. As a length similar to the nugget diameter, a pressure-welded diameter can also be defined. The pressure-welded diameter is a diameter of a pressure-welded portion 121. The pressure-welded portion 121 is formed around the nugget. In the pressure-welded portion 121, solid metals constituting the steel sheets 100a and 100b are pressure-welded by plastic flow. The pressure-welded diameter is a length of a line segment that passes through the center of the nugget and connects end portions of the pressure-welded portion 121 (the end portions are formed in a sheet gap) (see FIG. 9). In order to increase the nugget diameter, spot welding may be performed with a large current or a large heat input. For example, a spot welding method for obtaining a nugget diameter of 5.0 √t (mm) or more or 5.5 Vt (mm) or more can be easily obtained by conducting a preliminary test or the like.

Furthermore, a minimum thickness of the spot welded joint 100 (a minimum thickness of the welded portion 110) (specifically, a length of a line segment connecting bottom portions of the depressed portions 110a and 110b) is 0.70 times or more the sum of the thicknesses of the steel sheets 100a and 100b (in a case where three or more steel sheets are spot-welded, a sum of thicknesses of these steel sheets). The minimum thickness of the spot welded joint 100 may be set to 0.73 times or more, 0.75 times or more, 0.78 times or more, 0.81 times or more, or 0.84 times or more the sum of the thicknesses of the steel sheets 100a and 100b (in a case where three or more steel sheets are spot-welded, the sum of the thicknesses of these steel sheets). Here, the minimum thickness of the welded portion 110 is a minimum thickness between a surface of the welded portion 110 and a rear surface of the welded portion 110 in a direction perpendicular to a ground surface of the steel sheet 100b. A specific measurement method is as follows. That is, front and rear surfaces of a thick indentation portion of the welded portion 110 are clamped with a caliper gauge, and a value with the smallest thickness indicated is defined as the minimum thickness of the spot welded joint 100 (minimum thickness of the welded portion 110). For example, in a case of welding of two steel sheets, a minimum distance from a surface of an upper steel sheet indentation portion to a rear surface of a lower steel sheet indentation portion was set as the minimum thickness of the welded joint, and in a case of welding of three or more steel sheets, a minimum distance between front and rear surfaces of an indentation portion was set as the minimum thickness of the welded joint. In the present embodiment, since the indentation is suppressed to a small size, the minimum thickness of the spot welded joint 100 can be sufficiently large even in a case where the nugget diameter is 5.0 √t or more. In other words, depths of the depressed portions 110a and 110b are shallow. An upper limit of the minimum thickness of the spot welded joint 100 is not particularly limited, but may be 0.95 times or less, 0.90 times or less, or 0.88 times or less the sum of the thicknesses of the steel sheets 100a and 100b from the viewpoint of securing the joint strength between the steel sheets 100a and 100b.

Furthermore, in the X-ray transmission image of the welded portion 110, an area of the splash portion 200 is 30% to 160% of an area of the pressure-welded portion 121. That is, a splash area ratio is 30% to 160%. Here, the splash area ratio is obtained by the following method. First, a planar X-ray transmission image is acquired. FIG. 10 shows an example of the planar X-ray transmission image. A dark-colored, substantially circular portion is the nugget 120. The pressure-welded portion 121 is formed around the nugget 120, and the splash portion 200 extends from the pressure-welded portion 121. Then, a straight line passing through the center of the nugget and having the minimum nugget diameter is determined from the X-ray transmission image. Then, the spot welded joint is cut, machined, and polished so that a surface including the determined straight line and the sheet thickness direction becomes an observed section. The cut section is observed, and a pressure-welded diameter, which is the diameter of the pressure-welded portion 121, is measured. Next, the area of the pressure-welded portion 121 (= π × (pressure-welded diameter/2)²) is obtained from the measured pressure-welded diameter. The nugget diameter is also determined by the cross section observation. Meanwhile, the area of the splash portion 200 is obtained based on the X-ray transmission image. The area of the splash portion is a value calculated by obtaining an area of a region surrounded by the splash and the pressure-welded portion from the X-ray transmission image, and subtracting the area of the pressure-welded portion described above from the area.

Then, the area of the splash portion 200 is divided by the area of the pressure-welded portion 121, and a value thus obtained is defined as the splash area ratio. In this manner, in the present embodiment, the area of the splash portion 200 is suppressed to 160% or less of the area of the pressure-welded portion 121. When the area of the splash portion 200 exceeds 160% of the area of the pressure-welded portion 121 (that is, when the splash area ratio exceeds 160%), the thickness of the welded portion 110 is insufficient, and a sufficient joint strength cannot be obtained. As necessary, the splash area ratio of the spot welded joint may be set to 140% or less, 120% or less, 100% or less, 80% or less, 70% or less, 60% or less, or 55% or less. As necessary, the splash area ratio may be set to 35% or more, 40% or more, 45% or more, or 50% or more.

Furthermore, it is preferable that the spot welded joint 100 has no crack. Here, having no crack means that there are no cracks or cavities in X-ray inspection and visual inspection of the cross section (including the straight line passing through the center of the above-mentioned nugget and the sheet thickness direction). In this manner, in the present embodiment, it is possible to suppress the occurrence of cracks even in a case where the nugget 120, which is relatively large, is formed.

### [Examples]

Next, examples of the present embodiments will be described. In this example, in order to confirm the effect of the present embodiment, a set of steel sheets was spot-welded under the conditions shown in Table 1. As the steel sheets, a high strength steel sheet A (CR1180 steel, a sheet thickness of 1.6 mm) having a tensile strength of 1180 MPa-grade (1180 to 1330 MPa),
a hot-dip galvanized steel sheet B (GA980 steel, a sheet thickness of 1.6 mm) having a tensile strength of 980 MPa-grade (980 to 1,130 MPa),
a hot-dip galvanized steel sheet C (GA270 steel, a sheet thickness of 0.6 mm) having a tensile strength of a 270 MPa-grade (270 to 330 MPa),
a hot-dip galvanized steel sheet D (GI980 steel, a sheet thickness of 1.2 mm) having a tensile strength of a 980 MPa-grade (980 to 1130 MPa), and
a hot-stamping formed body E (a sheet thickness of 2.0 mm) using a hot-dip Al-plated steel sheet having a tensile strength of a 1.5 GPa-grade (1500 to 1650 MPa) were used. Combinations of these steel sheets are as shown in Table 1. For example, in the combination of A/A, a set of the steel sheets A was subjected to spot welding.

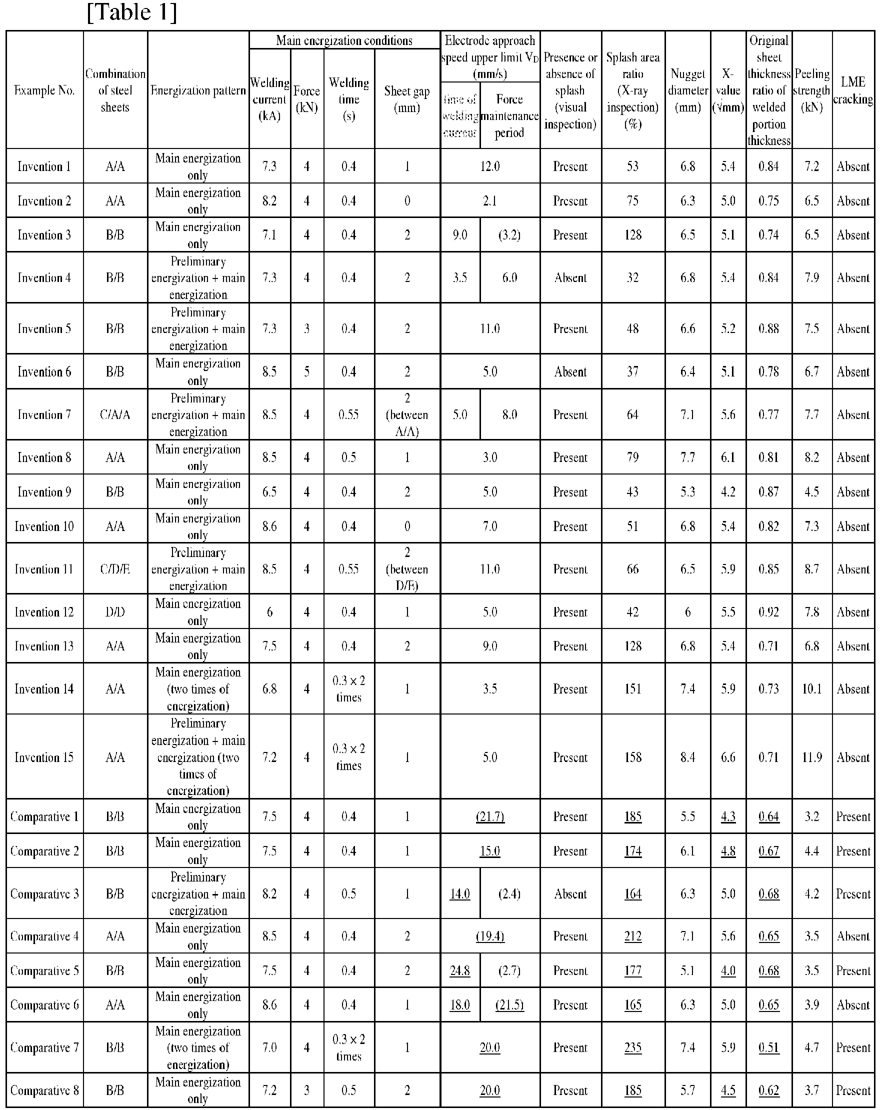

For the squeeze time and the force maintenance time, the set of steel sheets was pressurized with the forces shown in Table 1 for 0.5 s and 0.2 s, respectively. In addition, in all the examples and comparative examples except for Comparative Example 6, the electrode approach speed of the movable electrode was controlled to 12.0 mm/s or slower even during the force maintenance time.

The energization pattern for the time of welding current was implemented as a pattern of preliminary energization + main energization as well as a pattern of only main energization. Here, conditions for the main energization are as shown in Table 1, a welding current for the preliminary energization was set to 9 kA, a welding time was set to 40 ms, and a force was set to the same force as that of the main energization. Conditions for the preliminary energization were set to 9 kA and 40 ms.

In the conditions for the main energization, the "welding current" indicates a current value that flows between the electrodes during the time of welding current. Here, the current value is a value aimed at a nugget diameter of 5.0√t (t: the minimum sheet thickness (mm) of the plurality of steel sheets to be spot-welded) (5.5x/t in Invention Examples 7 and 8, and 4.0x4 in Invention Example 9 and Comparative Example 5). The "force" indicates a set force applied to the set of steel sheets during the welding period. The "welding time" indicates a length of the time of welding current. The "sheet gap" means a gap between the steel sheets on overlapping surfaces of the steel sheets (the portion to be spot-welded).

The electrode approach speed upper limit V_{D} in Table 1 is the upper limit set with respect to the lowering speed of the movable electrode, and upper limits of the time of welding current and the force maintenance time are each described. Examples with numerical values in parentheses are examples in which upper limits are not set, and maximum values of actual values of the electrode approach speeds are described in the parentheses.

The "presence or absence of splash" was confirmed by visually observing the welding phenomenon during the time of welding current. When splash occurs, a small amount of molten metal is scattered from a welded portion (more specifically, from a gap between the steel sheets). Therefore, the occurrence of splash could be easily confirmed by visual inspection. The "splash area ratio" was measured by the above-described method. A splash area ratio of 30% to 160% is an acceptable level. The "nugget diameter" was specified from a weld cross section photograph. In the column of "nugget diameter", an X value (X = nugget diameter/√t) obtained by dividing the nugget diameter by √t is shown. A nugget diameter of 5.0√t or more satisfies the standard of the welded joint of the present invention. The "original sheet thickness ratio of welded portion thickness" is a value obtained by dividing the minimum value (mm) of the thickness of the welded portion by the total thickness of the steel sheets before welding, and is a parameter corresponding to the indentation. A level of 0.70 or more is a level that is acceptable with a small decrease in strength. A peeling strength is a maximum load until a test piece is fractured, as measured by a cross tension test described in JIS Z 3137:1999. In this example, a peeling strength of 4.0 kN or more is an acceptable level. The peeling strength is preferably higher, and is more preferably 5.0 kN or more. The presence or absence of "LME cracking" was determined by cutting the spot welded joint into an appropriate size, and observing a cross section cut in a direction crossing the nugget with an optical microscope.

First, Invention Examples 1 to 15 will be examined. In any of the invention examples, the "splash area ratio", the "original sheet thickness ratio of welded portion thickness", and the "peeling strength" were at acceptable levels, and no LME cracking was confirmed. Invention Example 1 is an example corresponding to the upper limit of the electrode approach speed. Invention Example 2 is an example corresponding to the vicinity of the (preferable) lower limit of the electrode approach speed. Invention Example 3 is an example in which the force during the force maintenance time was actually measured. Invention Example 4 is an example in which no splash had occurred because the sheet gap was crushed by the preliminary energization. In addition, since the upper limit of the electrode approach speed was low, the indentation was small. Invention Example 5 is an example of low pressurization conditions. Invention Example 6 is an example of high pressurization conditions.

Invention Examples 7 and 8 are examples in which the nugget diameter exceeded 5.5√t. In addition, in Invention Example 7, three steel sheets were spot-welded. Even in a case of forming a large nugget as described above, the indentation was small, and no LME cracking was observed. Invention Example 9 is an example in which the nugget diameter was about 4.0√t. Even in a case where the nugget diameter was small as described above, a peeling strength of 4.0 kN or more, which was the target, could be secured. However, the peeling strength was slightly lower than that of the other invention examples and was less than 5.0 kN. Invention Example 10 is an example in which splash had occurred during the force maintenance time. In Invention Example 10, since the electrode approach speed of the movable electrode was controlled to 12.0 mm/s or slower even during the force maintenance time, the indentation was small and no LME cracking was observed. Invention Examples 11 and 12 are examples in which the sheet thicknesses of the steel sheets were changed. Even in the case of the sheet thicknesses used in Invention Examples 11 and 12, good results were obtained. Invention Example 13 is an example in which the gun stiffness was low. In the spot welding device according to the present embodiment, the electrode approach speed of the movable electrode is controlled (that is, the control is performed in consideration of the deflection of the gun) based on data indicating the correlation between the rotation speed and the rate of change (time rate of change) in the torque of the servo motor 14 and the electrode approach speed of the electrode. Therefore, the indentation was small, and no LME cracking was observed. Invention Examples 14 and 15 are examples in which large nuggets were formed. In these examples, the indentation was also small, and no LME cracking was observed.

Next, Comparative Examples 1 to 8 will be examined. In Comparative Example 1, pressurization using an air cylinder was performed without setting the upper limit of the electrode approach speed. A maximum value of the electrode approach speed of the movable electrode was 21.7 mm/s. Therefore, the "original sheet thickness ratio of welded portion thickness" was small (in other words, the indentation was large). In addition, since the nugget shrank during the occurrence of splash, the "peeling strength" also became a particularly low value. LME cracking was also confirmed. In Comparative Example 2, since the upper limit of the electrode approach speed exceeded 12.0 mm/s, LME cracking had occurred. The "original sheet thickness ratio of welded portion thickness" was also at an unacceptable level. Comparative Example 3 is an example in which the upper limit of the electrode approach speed during the time of welding current exceeded 12.0 mm/s. Since the preliminary energization was performed, no splash could be visually confirmed. However, splash was observed by X-ray observation. In addition, since the electrode approach speed in the late stage of the energization was increased, the "original sheet thickness ratio of welded portion thickness" was small (in other words, the indentation was large). Furthermore, LME cracking also occurred.

Comparative Example 4 is an example in which the upper limit of the electrode approach speed was not set. Although no LME cracking was observed, the "original sheet thickness ratio of welded portion thickness" was small (in other words, the indentation was large), and the peeling strength was at an unacceptable level. Comparative Example 5 is an example in which the nugget diameter was aimed to be 4v/t. Also in this example, the electrode approach speed during the time of welding current exceeded 12.0 mm/s. Therefore, LME cracking was observed, the "original sheet thickness ratio of welded portion thickness" was small (in other words, the indentation was large), and the peeling strength was also at an unacceptable level. Comparative Example 6 is an example in which splash had occurred during the force maintenance time. In Comparative Example 6, since the upper limit of the electrode approach speed was large, the movable electrode descended at a fast speed together with the occurrence of splash. As a result, the "original sheet thickness ratio of welded portion thickness" was small (in other words, the indentation was large), and the peeling strength was at an unacceptable level. In Comparative Example 7, the upper limit of the electrode approach speed exceeded 12.0 mm/s. Therefore, the "original sheet thickness ratio of welded portion thickness" became small (in other words, the indentation was large), and LME cracking was observed. In Comparative Example 8, the upper limit of the electrode approach speed exceeded 12.0 mm/s. Therefore, the "original sheet thickness ratio of welded portion thickness" became small (in other words, the indentation was large), the peeling strength was at an unacceptable level, and LME cracking was also observed.

While the preferred embodiments of the present invention have been described above in detail with reference to the accompanying drawings, the present invention is not limited to such examples. It is obvious that a person having ordinary knowledge in the technical field to which the present invention pertains can come up with various changes or modifications within the scope of the technical idea described in the claims, and it is understood that these also belong to the technical scope of the present invention.

### [Brief Description of the Reference Symbols]

10 Spot welding device
11 Control unit
12 Storage unit
13 Force measurement unit
14 Servo motor
15 Energizing unit
16a Movable electrode
16b Fixed electrode
17 Input unit

## Claims

1. A spot welding device for performing spot welding on a plurality of steel sheets overlapping with each other by clamping the plurality of steel sheets between a pair of electrodes, and energizing the plurality of steel sheets while pressurizing the plurality of steel sheets,
wherein a speed at which the pair of electrodes approach each other is limited to at least 12.0 mm/s or slower during a period from start of the energization to end of the energization.

2. The spot welding device according to claim 1,
wherein the speed is limited to at least 12.0 mm/s or slower during a period from the end of the energization to end of a force maintenance time.

3. A method of controlling a spot welding device for performing spot welding on a plurality of steel sheets overlapping with each other by clamping the plurality of steel sheets between a pair of electrodes facing each other, and energizing the plurality of steel sheets while pressurizing the plurality of steel sheets, the method comprising:
limiting a speed at which the pair of electrodes approach each other to at least 12.0 mm/s or slower during a period from start of the energization to end of the energization.

4. The method of controlling a spot welding device according to claim 3,
wherein the speed is limited to at least 12.0 mm/s or slower during a period from the start of the energization to end of a force maintenance time.

5. A spot welded joint produced by overlapping a plurality of steel sheets having a tensile strength of 980 MPa or more and performing spot welding on the plurality of steel sheets,
wherein, when a minimum thickness of the plurality of steel sheets having a tensile strength of 980 MPa or more is denoted by t, a nugget diameter formed by the spot welding is 5.0√t or more,
a minimum thickness of the spot welded joint is 0.70 times or more a sum of thicknesses of the plurality of steel sheets, and
an area of a splash portion measured in an X-ray transmission image of a welded portion is 30% to 160% of an area of a pressure-welded portion.

6. The spot welded joint according to claim 5,
wherein the nugget diameter is 5.5√t or more.

7. The spot welded joint according to claim 5 or 6,
wherein the spot welded joint has no crack.

8. The spot welded joint according to any one of claims 5 to 7,
wherein the minimum thickness of the spot welded joint is 0.90 times or less the sum of the thicknesses of the plurality of steel sheets.

9. A method of producing the spot welded joint according to any one of claims 5 to 8, the method comprising:
limiting a speed at which a pair of electrodes provided in a spot welding device approach each other to at least 12.0 mm/s or slower during a period from start of energization to end of the energization.

10. The method of producing the spot welded joint according to claim 9,
wherein the speed is limited to at least 12.0 mm/s or slower during a period from the end of the energization to end of a force maintenance time.
